# EUROPÄISCHE PATENTSCHRIFT

(11) **EP 1 869 105 B1**
(45) Veröffentlichungstag und Bekanntmachung des Hinweises auf die Patenterteilung: **08.02.2017**
(21) Anmeldenummer: 06725581.0
(22) Anmeldetag: 05.04.2006
(51) Int. Cl.: C08G 65/26, C08G 18/48

(54) **VERFAHREN ZUR HERSTELLUNG VON POLYETHERALKOHOLEN**
METHOD FOR PRODUCING POLYETHER ALCOHOLS
PROCEDE DE PRODUCTION D'ALCOOLS DE POLYETHER

(30) Priorität: 06.04.2005 DE 102005015894
(43) Veröffentlichungstag der Anmeldung: 26.12.2007
(73) Patentinhaber: BASF SE, 67056 Ludwigshafen am Rhein (DE)
(72) Erfinder: DINSCH, Stefan, 01993 Schipkau (DE); WINKLER, Jürgen, 01987 Schwarzheide (DE); HÖPPNER, Gerd, 01987 Schwarzheide (DE); SEIFERT, Holger, 49163 Bohmte (DE)
(74) Vertreter: BASF IP Association
(86) Internationale Anmeldenummer: PCT/EP2006/061351
(87) Internationale Veröffentlichungsnummer: WO 2006/106122

(56) Entgegenhaltungen:
- EP-A- 0 755 955
- DE-A1- 2 241 242
- DE-A1- 10 237 910
- US-A- 3 190 927
- US-A- 3 442 888

## Beschreibung

Gegenstand der Erfindung ist ein Verfahren zur Herstellung von Polyetheralkoholen durch katalysierte Anlagerung von Alkylenoxiden an feste Startersubstanzen, vorrangig Saccharose, sowie die Verwendung dieser Polyetheralkohole zur Herstellung von Polyurethanen (PUR), insbesondere PUR-Schaumstoffen.

Die Herstellung von Polyetheralkholen durch anionische Polymerisation von Alkylenoxiden ist seit langem bekannt.

Näheres hierzu kann beispielsweise dem Kunststoffhandbuch, Band VII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel, entnommen werden.

Der Einsatz von zum Beispiel Mono-, Di- oder Polysacchariden und weiteren hochfunktionellen Verbindungen als Startsubstanzen für die Synthese von hochfunktionellen Polyetheralkoholen ist bekannt und oft beschrieben, insbesondere für die Herstellung von Polyetheralkoholen, die für eine Anwendung in PUR-Hartschäumen vorgesehen sind. Üblich sind Alkoxylierungen dieser Verbindungen im Gemisch mit flüssigen Costartern, wie Diolen, Triolen oder auch Aminen. Je nach Anteil dieses Costarters wird eine mehr oder weniger hohe Funktionalität des Polyetheralkohols erhalten.

Zur Erzielung einer hohen Netzwerkdichte in Polyurethan-Hartschaumstoffen können Polyetheralkohole hoher Funktionalitäten verwendet werden. Dies erfordert Startsubstanzen mit einer hohen Zahl an Hydroxylgruppen pro Molekül. Durch die Erhöhung der Netzwerkdichte im Schaum können mechanische Eigenschaften der Schäume beeinflusst und optimiert werden. Die Ausbildung hochvernetzter Strukturen führt zum schnellen Aufbau stabiler Schäume und damit zur Beschleunigung und Verbesserung des Aushärteverhaltens im System. Insbesondere die gut verfügbare Saccharose zählt zu diesen Substanzen, die Basis hochfunktioneller Polyetheralkohole sein können.

Ein Verfahren zur Alkoxylierung von festen Startsubstanzen wird in US-A-3346557 beschrieben. Hier wird die 3 bis 8 Hydroxylgruppen/mol enthaltende Startsubstanz mit einem Aminkatalysator vermischt und in einem Addukt, bestehend aus einer bei Reaktionsbedingungen festen, 3 bis 8 Hydroxylgruppen/mol enthaltenden Verbindung mit 0,5 bis 1,5 mol eines vicinalen Alkylenoxids, umgesetzt. Beispielsweise werden Saccharose, Tributylamin und destilliertes Wasser vermischt und mit Propylenoxid umgesetzt. Dieses Addukt wird gestrippt, mit Tributylamin vermischt und weiter propoxyliert. Das Anlagerungsprodukt aus Saccharose und Propylenoxid dient als Reaktionsmedium für die Aufnahme weiterer Saccharose für die Umsetzung mit Alkylenoxiden. Bei diesem Verfahren besteht die Gefahr, dass durch die erhöhte thermische Beanspruchung des Vorproduktes dunkle Produktfarben entstehen, die bei einigen Anwendungen nicht erwünscht sind. Gleichzeitig erfordert dieses Verfahren einen erneuten Einsatz von alkalischen Produkten oder Fertigpolyolen. Dies geht zu Lasten der Verfahrenseffektivität.

DD 211797 beschreibt ein Verfahren zur stufenweisen Herstellung von Polyetheralkoholen mit festen oder hochviskosen Startsubstanzen in Verbindung mit Stoffen, die eine kombinierte Funktion als Katalysator und Costarter besitzen, wie Ammoniak und/oder seine Propoxylierungsprodukte. So werden beispielsweise wässrige Ammoniaklösung, wässrige Kalilauge und Saccharose vermischt und in einer ersten Reaktionsstufe propoxyliert. Das erhaltene Produkt wird gestrippt und mit weiterem Propylenoxid umgesetzt. Der Einbau von stickstoffhaltigen Verbindungen führt zu niedrigerer Viskosität des Polyetheralkohols und durch die erhöhte Eigenreaktivität zur Absenkung des Aushärteverhaltens in vielen Anwendungen.

Das in DE-A-4209358 beschriebene Verfahren zur Herstellung von Polyetheralkoholen auf Basis von festen und hochviskosen hydroxyl-, imin- oder aminfunktionellen Startsubstanzen beinhaltet, dass der Startsubstanz bzw. dem Startsubstanzgemisch aliphatische Amine in einer Menge von 0,5 bis 5 Gew.-%, bezogen auf das Polyolgewicht, zugesetzt werden und anschließend eine Umsetzung mit Alkylenoxiden erfolgt. Diese Polyole zeichnen sich durch niedrige Kaliumgehalte und helle Färbungen aus. Auch in diesem Verfahren bewirkt der Amingehalt des Polyols eine erhöhte Eigenreaktivität gegenüber DE-A--2241242 und US-A-3442888 offenbaren relevante Verfahren zur Herstellung von Polyetheralkoholen.

Die Herstellung von hochfunktionellen Polyetheralkoholen auf Basis von Saccharose und weiteren, meist flüssigen Costartern ist technologisch schwierig, wenn der Saccharoseanteil im Startergemisch 75 Gew.-% überschreitet und die Löslichkeit der Saccharose in den Costartern gering ist.

Es hat sich gezeigt, dass in Polyetheralkoholen auf Basis von wasserlöslichen festen H-funktionellen Startern, vorzugsweise von Sorbit und/oder Saccharose, besonders bevorzugt Saccharose, insbesondere solchen mit einem hohen Anteil an Saccharose in der Startsubstanz, häufig ein hoher Anteil an nicht umgesetzter Saccharose vorliegt. Diese kann aus dem Polyetheralkohol ausfallen und zu Bodensätzen führen. Durch die Saccharose kann es weiterhin zu Störungen bei der Dosierung der Polyolkomponente bei der Herstellung der Polyurethane kommen. Außerdem sinkt dadurch die tatsächliche Funktionalität der Polyetheralkohole unter die errechnete Funktionalität.

Mit der Steigerung der Funktionalität der Polyole erhöht sich der Anteil der Saccharose gegenüber den Anteilen der flüssigen oder sich in Schmelze befindlichen Costartern im Startergemisch. Damit wird der Anteil fester Bestandteile im Startergemisch so groß, dass eine Reihe von Nachteilen in Technologie und Produktqualität entsteht. Die nicht umgesetzte Saccharose verändert die Mengenbilanz im Polyol und erschwert die Qualitätssicherung bei der Polyolherstellung.

So wird beispielsweise die Durchmischung in der Startphase der Reaktion erschwert. Da die Lösung von Saccharose in Diolen oder Triolen gering ist und ihre Löslichkeit in deren Alkoxylaten noch weiter abnimmt, besteht die Gefahr, dass bei vorgegebener Hydroxylzahl von zum Beispiel > 400 freie kristalline Saccharose durch die Reaktion geführt wird und am Ende der Alkoxylierung nicht umgesetzte Saccharose als Bodensatz vorhanden ist.

Um Probleme bei der Verarbeitung der Polyetheralkohole und der Eigenschaften der Hartschaumstoffe zu vermeiden, werden Polyetheralkohole auf Basis fester Starter, insbesondere Saccharose, benötigt, die keine Restgehalte an nicht umgesetztem festen Starter aufweisen.

Aufgabe der Erfindung war es, ein Verfahren zur Herstellung von Polyetheralkoholen auf Basis von festen Startsubstanzen, insbesondere Saccharose, bereitzustellen, bei dem Polyetheralkohole ohne Restanteile an nicht umgesetzter fester Startsubstanz resultieren, das ohne zusätzliche Verfahrensschritte auskommt und bei dem die üblichen Ausgangsverbindungen verwendet werden. Dabei sollte auf die Verwendung von Aminen in der Startsubstanzmischung verzichtet werden, um eine Eigenreaktivität der Polyetheralkohole zu vermeiden.

Es wurde überraschenderweise gefunden, dass bei der Umsetzung von wässrigen Sorbit- oder Saccharoselösungen mit Alkylenoxiden, beispielsweise mit Propylenoxyd, die Umsetzung des Wassers sehr schwer anspringt, und damit wesentlich langsamer ist als die Reaktion mit Sorbit, Saccharose oder Diolen und/oder Triolen. Es ist daher überraschenderweise möglich, eine größere Menge an Wasser in die Startsubstanzmischung einzuführen, als für die Erreichung der Zielfunktionalität erforderlich ist, ohne dass es zu einem signifikanten Anstieg des Glykolgehalts im Polyetheralkohol und damit eine unerwünschte Verringerung der Funktionalität kommt. Weiterhin wurde gefunden, dass die Löslichkeit der Umsetzungsprodukte von Saccharose mit Alkylenoxiden in Wasser deutlich schlechter ist als die Löslichkeit von Saccharose in Wasser, so dass das in der Reaktionsmischung befindliche Wasser weitere im Reaktionsgemisch befindliche Saccharose lösen kann, bis die in der Reaktionsmischung befindliche Saccharose abreagiert ist. Danach kann das Wasser aus dem Reaktionsgemisch entfernt werden. Diese Effekte können auch bei anderen wasserlöslichen festen Startsubstanzen beobachtet werden.

Gegenstand der Erfindung ist demzufolge ein Verfahren zur Herstellung von Polyetheralkoholen durch katalytische Anlagerung von Alkylenoxiden an eine Startsubstanzmischung, enthaltend wasserlösliche, bei Raumtemperatur feste H-funktionelle Startsubstanzen, insbesondere Sorbit und/oder Saccharose, besonders bevorzugt Saccharose, bei Reaktionstemperatur flüssige Alkohole und Wasser unter Verwendung von Alkali- und/oder Erdalkalimetallhydroxiden als Katalysatoren, dadurch gekennzeichnet, dass die Menge an Wasser 1,0 bis 6,0 Gew.-%, bezogen auf das Gewicht der Startsubstanzmischung, beträgt, wobei die Startsubstanzmischung keine aminischen Bestandteile enthält.. ,und wobei nach der Anlagerung von 2 bis 6 Mol Alkylenoxid an die Startsubstanzmischung der Wassergehalt in der Reaktionsmischung auf kleiner 1 Gew-%, bezogen aud das Gewicht der Startsubstanzmischung, reduziert wird.

Gegenstand der Erfindung sind weiterhin die nach dem erfindungsgemäßen Verfahren hergestellten Polyetheralkohole.

Bevorzugt beträgt die Menge des Wassers in der Startsubstanzmischung 1,0 bis 3,5 Gew.-%, bezogen auf das Gewicht der Startsubstanzmischung.

Die Funktionalität der Startsubstanzmischung ohne Berücksichtigung des Wassers beträgt vorzugsweise mindestens 4,5, besonders bevorzugt 5 und insbesondere 6,5.

In einer besonders bevorzugten Ausführungsform des erfindungsgemäßen Verfahrens wird nach der Anlagerung von 2 bis 6, insbesondere von 4 bis 6 Mol Alkylenoxid an die Startsubstanzmischung der Wassergehalt in der Reaktionsmischung auf kleiner 1 Gew.-%, bezogen auf das Gewicht der Startsubstanzmischung, reduziert. Bei dieser Verfahrensweise können Polyetheralkohole erhalten werden, die eine besonders hohe Funktionalität, vorzugsweise größer 4,5, besonders bevorzugt 5,0 und insbesondere 6,5, und einen sehr geringen Gehalt an freier Startsubstanz, insbesondere Saccharose, aufweisen.

Als feste Startsubstanzen werden, wie beschrieben, insbesondere Zucker, vorzugsweise Sorbit und/oder Saccharose und besonders bevorzugt Saccharose eingesetzt.

Als bei Reaktionstemperatur flüssige Alkohole, die auch als Costarter bezeichnet werden, kommen vorzugsweise zwei- bis dreifunktionelle Alkohole zum Einsatz. Bespiele hierfür sind Glycerin, Diglycerin, Trimethylolpropan und Glykole, wie Ethylenglykol, Diethylenglykol, Triethylenglykol, Propylenglykol, Dipropylenglykol, Tripropylenglykol, oder Butandiole einzeln oder als beliebige Gemische aus mindestens zwei der genannten Polyole. Besonders bevorzugt eingesetzt werden Glycerin und/oder Trimethylolpropan.

Die Auswahl des Costarters für Saccharose kann nach ökonomischen Gesichtspunkten erfolgen, aber auch nach erforderlicher Eigenreaktivität des Polyetheralkohols oder nach Löslichkeit des verwendeten Treibmittels im Polyetheralkohol.

So ist bei der Verwendung von Glycerin und/oder Trimethylolpropan als Costarter die Löslichkeit von Cyclopentan, einem häufig zur Herstellung von PUR-Hartschaumstoffen eingesetzten Treibmittel, im Polyol besonders gut.

Als Alkylenoxide werden vorzugsweise Ethylenoxid und/oder Propylenoxid, insbesondere nur Propylenoxid, eingesetzt.

Durch das erfindungsgemäße Verfahren können Polyetheralkohole mit Restgehalten an festem Starter von kleiner 0,1 Gew.-%, bevorzugt kleiner 0,08 Gew.-%, bezogen auf das Gewicht des Polyetheralkohols, insbesondere kleiner 0,05 Gew.-%, bezogen auf das Gewicht des Polyetheralkohols, erhalten werden.

Demgegenüber weisen ansonsten gleiche Polyetheralkohole, deren Startergemische getrocknet wurden, nach der Synthese wesentlich höhere Gehalte an freier Saccharose auf, wobei die Saccharose in vielen Fällen als Bodensatz vorliegt.

Überraschenderweise findet bei dem erfindungsgemäßen Verfahren keine nennenswerte Reaktion des Wassers mit Alkylenoxiden unter Bildung von Glykolen statt.

Wie beschrieben, wurde überraschenderweise gefunden, dass die Reaktion der Alkylenoxide mit Wasser gegenüber den übrigen, Hydroxylgruppen tragenden Komponenten der Startsubstanz deutlich verzögert ist. Eine spürbare Reaktion des Wassers zu Glykolen erfolgt erst, wenn die Wassermenge ausreichend groß wird, dass aus statistischen Gründen die Reaktion des Alkylenoxids mit dem Wasser häufiger stattfindet, wobei dann die Reaktion in Richtung der Glykolbildung verschoben wird. Dies ist jedoch bei den erfindungsgemäß verwendeten Wassermengen nicht der Fall.

Auch beim erfindungsgemäßen Verfahren kommt es zur Bildung von Glykolen durch Alkoxylierung von Wasser. Diese ist allerdings deutlich unterdrückt und macht sich bei den Eigenschaften des Polyetheralkohols kaum nachteilig bemerkbar.

Dieser leichten Erhöhung der Glykolanteile im Polyol mit sehr wenig abgesenkter Funktionalität steht der gute Löseeffekt des Wassers für Saccharose gegenüber. Es wurde beobachtet, dass mit erhöhtem Anteil an gelöster Saccharose im Startergemisch die Umsetzung der Saccharose mit Alkylenoxyd verbessert und der Gehalt freier Saccharose im Polyol weitgehend unterdrückt wird.

Als basischer Katalysator wird vorzugsweise Kaliumhydroxid eingesetzt. Zumeist erfolgt der Einsatz in Form der wässrigen Lösung. Dieses Wasser ist Teil der erfindungsgemäß verwendeten Wassermenge.

Die Hydroxylzahl der erfindungsgemäßen Polyetheralkohole liegt vorzugsweise im Bereich von 300 bis 600, besonders von 350 bis 500 mg KOH/g.

Ansonsten erfolgt die Herstellung der Polyetheralkohole nach den üblichen und bekannten Verfahren.

In den Reaktor, zumeist einen Rührreaktor mit Reaktorheizung und -kühlung, Dosiereinrichtungen für feste und flüssige Substanzen und Alkylenoxide sowie Einrichtungen zur Inertisierung mit Stickstoff und einem Vakuumsystem werden ein oder mehrere Costarter und eine definierte Menge Wasser vorgelegt, die gewünschte Menge Kaliumhydroxid zudosiert, auf 60 bis 90°C erwärmt, Saccharose zugegeben, gut vermischt und auf 70 bis 110°C erwärmt.

Die Gesamtmenge des Wassers setzt sich aus dem Wasseranteil der Kalilauge, dem Reaktionswasser der Alkoxylierung und der zusätzlich zugegebenen Menge an Wasser zusammen. Sie beträgt, wie beschrieben, 1,0 bis 6,0 Gew.-%, bezogen auf das Gewicht der Startsubstanzmischung. Anschließend wird Propylenoxid dosiert. Die Reaktionstemperatur steigt während der Umsetzung auf Bereiche von 105 bis 115°C. an die Umsetzung schließt sich vorzugsweise eine Nachreaktionszeit zum vollständigen Umsatz des Alkylenoxids an. Diese Nachreaktionszeit beträgt vorzugsweise zwischen 2 und 5 Stunden.

Dabei kann die Gesamtmenge der eingesetzten Alkylenoxide in einem Schritt nacheinander dosiert werden.

Es ist jedoch, wie beschrieben, bevorzugt, an die Startsubstanz zunächst 2 bis 6, insbesondere 4 bis 6 Mol Alkylenoxid anzulagern, danach den Wassergehalt des so erzeugten Vorpolymeren auf kleiner 1,0 Gew.-%, bezogen auf das Gewicht der Startsubstanzmischung, zu reduzieren und danach das übrige Alkylenoxid anzulagern.

Das so erhaltene Vorpolymer hat vorzugsweise eine Hydroxylzahl zwischen 650 und 820 mg KOH/g.

Dieses Vorpolymer wird in einem weiteren Schritt zum fertigen Polyetheralkohol umgesetzt. Dazu kann, wie beschrieben, der Wassergehalt auf einen Wert von kleiner 1 Gew.-%, bezogen auf das Gewicht des Vorpolymeren, eingestellt werden.

Danach wird das Vorpolymer bei Temperaturen von 105 bis 118°C mit weiterem Propylenoxid bis zur gewünschten Hydroxylzahl von 300 bis 600, besonders von 350 bis 500 mg KOH/g umgesetzt.

Der so erhaltene Polyetheralkohol wird wie üblich aufgearbeitet. Dazu wird er zumeist mit Wasser hydrolisiert, mit Mineralsäure neutralisiert, filtriert und unter Vakuum gestrippt.

Die nach dem erfindungsgemäßen Verfahren hergestellten Polyetheralkohole werden vorzugsweise zur Herstellung von PUR-Hartschaumstoffen eingesetzt. Die Herstellung der PUR-Hartschaumstoffe erfolgt nach bekanntem Verfahren durch Umsetzung von Polyisocyanaten mit Verbindungen mit mindestens zwei mit Isocyanatgruppen reaktiven Wasserstoffatomen.

Als organische Polyisocyanate für die Herstellung von PUR-Hartschaumstoffen kommen vorzugsweise aromatische mehrwertige Isocyanate in Betracht. Bevorzugt werden Diphenylmethandiisocyanat (MDI) und/oder Gemische aus Diphenylmethandiisocyanat und Polyphenylenpolymethylenpolyisocyanaten (Roh-MDI) eingesetzt.

Im Gemisch mit den nach dem erfindungsgemäßen Verfahren hergestellten Polyetheralkoholen können weitere Verbindungen mit mindestens zwei mit Isocyanatgruppen reaktiven Wasserstoffatomen eingesetzt werden. dabei handelt es sich zumeist um Polyetheralkohole. Diese besitzen zumeist eine Funktionalität von vorzugsweise 3 bis 8 und Hydroxylzahlen von vorzugsweise 100 mg KOH/g bis 600 mg KOH/g und insbesondere 140 mg KOH/g bis 480 mg KOH/g.

Zu den Verbindungen mit mindestens zwei gegenüber Isocyanat reaktiven Wasserstoffatomen gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel werden insbesondere Diole und/oder Triole mit Molekulargewichten kleiner als 400, vorzugsweise 60 bis 300 verwendet.

Die Herstellung der PUR-Hartschaumstoffe wird üblicherweise in Anwesenheit von Treibmitteln, Katalysatoren und Zellstabilisatoren sowie, falls erforderlich weiteren Hilfs- und/oder Zusatzstoffen durchgeführt.

Als Treibmittel kann Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane, Cycloalkane und Fluoralkane.

Die Herstellung der Hartschaumstoffe wird weiterhin in Anwesenheit von Katalysatoren sowie, falls erforderlich, weiteren Hilfs- und/oder Zusatzstoffen durchgeführt. Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind vorzugsweise stark basische Amine, wie z.B. tertiäre aliphatische Amine, Imidazole, Amidine, sowie Alkanolamine.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt.

Die erhaltenen Hartschaumstoffe können vorzugsweise für die Wärmeisolierung, beispielsweise in Kühlgeräten, für die Isolierung von Rohrleitungen und für die Herstellung von Verbundelementen, sogenannten Sandwichelementen, eingesetzt werden.

Das erfindungsgemäße Verfahren ermöglicht es, insbesondere die hervorragende Löslichkeit von Saccharose in Wasser zu nutzen, um in der Startphase der Alkoxylierung von saccharosehaltigen Startergemischen die Umsetzung der Saccharose zu forcieren. Mit der Umsetzung der Saccharose mit Propylenoxyd nimmt die Löslichkeit dieser Propoxylate in Wasser sehr schnell ab, so dass weitere Saccharose gelöst und ihrerseits propoxyliert werden kann.

Um die parallel ablaufende Glykolbildung mit dem Wasser zu minimieren, kann nach der Bildung eines Vorpolymeren mit geringem Alkoxylierungsgrad der Wassergehalt abgesenkt und so die Glykolbildung im weiteren Verlauf der Alkoxylierung eingeschränkt werden. Die Menge des Wassers in den Verfahrensstufen des erfindungsgemäßen Verfahrens muss auf das Startergemisch und die am Ende zu erzielende Hydroxylzahl abgestimmt werden. Dabei kann das Wasser, wie bereits ausgeführt, auch in Form einer wässrigen Alkalihydroxidlösung zugegeben werden.

Durch das erfindungsgemäße Verfahren wird das Absenken der Funktionalität eingeschränkt und das Auftreten von nichtgelöster Saccharose im Polyetheralkohol stark unterdrückt, bei geeigneter Reaktionsführung sogar nahezu vermieden.

Durch das erfindungsgemäße Verfahren können klare, gut verarbeitbare Polyetheralkohole zur Verfügung gestellt werden, deren Startergemische, bestehend aus Saccharose und hydroxylgruppenhaltigen flüssigen Costartern, rechnerische Funktionalitäten bis zu 7,25 besitzen und somit den Aufbau einer hohen Netzwerkdichte im Hartschaum ermöglichen.

Die Erfindung soll an den nachfolgenden Beispielen näher beschrieben werden.

### Beispiel 1 (Vergleichsbeispiel):

In einen 250 l - Druckautoklaven mit Etagenrührwerk (250 U/min.), Reaktorheizung und -kühlung, Dosiereinrichtungen für feste und flüssige Substanzen und Alkylenoxide sowie Einrichtungen zur Stickstoffinertisierung und einem Vakuumsystem wurden 17,3 kg Glycerin vorgelegt und auf 90°C erwärmt. Danach wurden 0,947 kg 48 %-ige wässrige Kalilauge und 57,0 kg Saccharose zudosiert und vermischt. Die Gemischtemperatur wurde auf 108°C erhöht und durch Strippen unter Vakuum der Wassergehalt auf < 0,1 Gew.-% abgesenkt. Anschließend wurden 51,4 kg Propylenoxid dosiert, wobei ein Druck von 6,5 bar nicht überschritten wurde. Die Reaktionstemperatur stieg während der Umsetzung bis auf 112°C und wurde für die gesamte Reaktionszeit beibehalten. Das so erhaltene alkalische Propoxylat wies folgende Werte auf:

| | |
|---|---|
| Hydroxylzahl | 778 mg KOH/g |
| Wassergehalt | 0,114% |

Die Probe des Produktes hatte einen kristallinen Niederschlag.

Das Vorpolymer wurde bei 112°C und 6,5 bar mit weiteren 112,8 kg Propylenoxyd umgesetzt.

Es folgte eine Nachreaktion von 3 Stunden bei 115°C. Der erhaltene rohe Polyetheralkohol wurde mit Wasser hydrolisiert, mit Phosphorsäure neutralisiert, filtriert und vakuumgestrippt.

Das Endprodukt wies nachstehende Werte auf:

| | |
|---|---|
| Hydroxylzahl: | 442 mg KOH/g |
| Säurezahl | 0,014 mg KOH/g |
| Wassergehalt | 0,036 Gew.-% |
| Viskosität 25°C | 19780 mPa s |
| | |
| Gehalt freie Saccharose | 0,672 Gew.-% |

Die Probe des Produktes hatte einen kristallinen Niederschlag.

### Beispiel 2, (Vergleichsbeispiel)

In einem analog dem Vergleichsbeispiel 1 ausgerüsteten Druckautoklaven wurden 14,13 kg Diethylenglykol vorgelegt und auf 90°C erwärmt. Danach wurden 0,898 kg 48 %-ige wässrige Kalilauge und 57,0 kg Saccharose zudosiert und vermischt. Die Gemischtemperatur wurde auf 108°C erhöht. Anschließend wurden 45,0 kg Propylenoxid dosiert, wobei ein Druck von 6,5 bar nicht überschritten wurde. Die Reaktionstemperatur stieg während der Umsetzung bis auf 112°C und wurde für die gesamte Reaktionszeit beibehalten. Das so erhaltene alkalische Propoxylat wies folgende Werte auf:

| | |
|---|---|
| Hydroxylzahl | 717 mgKOH/g |
| Wassergehalt | 0,171% |

Die Probe des Produktes hatte einen kristallinen Niederschlag.

Das Vorpolymer wurde bei 112°C und 6,5 bar mit weiteren 83,3 kg Propylenoxyd umgesetzt.

Es folgte eine Nachreaktion von 3 Stunden bei 115°C. Das erhaltene rohe Polyetheralkohol wurde mit Wasser hydrolisiert, mit Phosphorsäure neutralisiert, filtriert und vakuumgestrippt.

Das Endprodukt wies nachstehende Werte auf:

**Errechnete Funktionalität: 5,33**

| | |
|---|---|
| Hydroxylzahl: | 446 mgKOH/g |
| Säurezahl | 0,037 mgKOH/g |
| Wassergehalt | 0,031 Gew.-% |
| Viskosität 25°C | 18120 mPa s |
| | |
| Gehalt freie Saccharose | 0,593 Gew.-% |

Das Produkt hatte einen kristallinen Niederschlag.

### Beispiel 3, (erfindungsgemäß)

In einem analog dem Vergleichsbeispiel 1 ausgerüsteten Druckautoklaven wurden 14,65 kg Glycerin vorgelegt und auf 90°C erwärmt. Danach wurden 0,898 kg 48 %-ige wässrige Kalilauge, 0,178 kg Wasser und 48,25 kg Saccharose zudosiert und vermischt. Die Gemischtemperatur wurde auf 108°C erhöht. Anschließend wurden 42,9 kg Propylenoxid dosiert, wobei ein Druck von 6,5 bar nicht überschritten wurde. Die Reaktionstemperatur stieg während der Umsetzung bis auf 112°C und wurde für die gesamte Reaktionszeit beibehalten. Das so erhaltene alkalische Propoxylat wies folgende Werte auf:

| | |
|---|---|
| Hydroxylzahl | 772 mgKOH/g |
| Wassergehalt | 0,882 % |

Die Probe des Produktes hatte keinen kristallinen Niederschlag.

Das Vorpolymer wurde bei 112°C und 6,5 bar mit weiteren 94,5 kg Propylenoxyd umgesetzt.

Es folgte eine Nachreaktion von 3 Stunden bei 115°C. Der erhaltene rohe Polyetheralkohol wurde mit Wasser hydrolisiert, mit Phosphorsäure neutralisiert, filtriert und vakuumgestrippt.

Das Endprodukt wies nachstehende Werte auf:

| | | |
|---|---|---|
| Errechnete Funktionalität: | 5,33 | |
| Hydroxylzahl: | 445 | mg KOH/g |
| Säurezahl | 0,002 | mg KOH/g |
| Wassergehalt | 0,026 | Gew.-% |
| Viskosität 25°C | 19155 | mPa s |
| Gehalt freie Saccharose | 0,052 | Gew.-% |

Das Produkt war klar.

### Beispiel 4, (erfindungsgemäß)

In einem analog dem Vergleichsbeispiel 1 ausgerüsteten Druckautoklaven wurden 14,13 kg Diethylenglykol vorgelegt und auf 90°C erwärmt. Danach wurden 0,898 kg 48 %-ige wässrige Kalilauge, 0,545 kg Wasser und 57,0 kg Saccharose zudosiert und vermischt. Die Gemischtemperatur wurde auf 108°C erhöht. Anschließend wurden 45,0 kg Propylenoxid dosiert, wobei ein Druck von 6,5 bar nicht überschritten wurde. Die Reaktionstemperatur stieg während der Umsetzung bis auf 112°C und wurde für die gesamte Reaktionszeit beibehalten. Das so erhaltene alkalische Propoxylat wies folgende Werte auf:

| | | |
|---|---|---|
| Hydroxylzahl | 710 | mgKOH/g |
| Wassergehalt | 0,933 | % |

Die Probe des Produktes hatte keinen kristallinen Niederschlag.

Das Vorpolymer wurde bei 112°C und 6,5 bar mit weiteren 85,3 kg Propylenoxyd umgesetzt.

Es folgte eine Nachreaktion von 3 Stunden bei 115°C. Der erhaltene rohe Polyetheralkohol wurde mit Wasser hydrolisiert, mit Phosphorsäure neutralisiert, filtriert und vakuumgestrippt.

Das Endprodukt wies nachstehende Werte auf:

| | |
|---|---|
| Errechnete Funktionalität: | 5,33 |
| Hydroxylzahl: | 454 mgKOH/g |
| Säurezahl | 0,032 mgKOH/g |
| Wassergehalt | 0,038 Gew.-% |
| Viskosität | 25°C 18845 mPas |
| | |
| Gehalt freie Saccharose | 0,087 Gew.-% |

Das Produkt war frei von festen Rückständen.

### Beispiel 5, (erfindungsgemäß)

In einem analog dem Vergleichsbeispiel 1 ausgerüsteten Druckautoklaven wurden 9,25 kg Diethylenglykol vorgelegt und auf 90°C erwärmt. Danach wurden 0,898 kg 48 %-ige wässrige Kalilauge, 2,956 kg Wasser und 59,74 kg Saccharose zudosiert und vermischt. Die Gemischtemperatur wurde auf 108°C erhöht. Anschließend wurden 48,0 kg Propylenoxid dosiert, wobei ein Druck von 6,5 bar nicht überschritten wurde. Die Reaktionstemperatur stieg während der Umsetzung bis auf 112°C und wurde für die gesamte Reaktionszeit beibehalten. Anschließend wurde das Produkt durch Vakuumstrippen auf einen Wassergehalt von 1 Gew.-% getrocknet. Das so erhaltene alkalische Propoxylat wies folgende Werte auf:

| | |
|---|---|
| Hydroxylzahl | 715 mg KOH/g |
| Wassergehalt | 1,060 % |

Die Probe des Produktes hatte keinen kristallinen Niederschlag.

Das Vorpolymer wurde bei 112°C und 6,5 bar mit weiteren 88,0 kg Propylenoxyd umgesetzt.

Es folgte eine Nachreaktion von 3 Stunden bei 115°C. Der erhaltene rohe Polyetheralkohol wurde mit Wasser hydrolisiert, mit Phosphorsäure neutralisiert, filtriert und vakuumgestrippt.

Das Endprodukt wies nachstehende Werte auf:

| | | |
|---|---|---|
| Errechnete Funktionalität: | 6,0 | |
| Hydroxylzahl: | 442 | mg KOH/g |
| Säurezahl | 0,008 | mg KOH/g |
| Wassergehalt | 0,054 | Gew.-% |
| Viskosität 25°C | 28760 | mPa s |
| | | |
| Gehalt freie Saccharose | 0,071 | Gew.-% |

Das Produkt war völlig klar.

### Beispiel 6, (erfindungsgemäß)

In einem analog dem Vergleichsbeispiel 1 ausgerüsteten Druckautoklaven wurden 8,57 kg Glycerin vorgelegt und auf 90°C erwärmt. Danach wurden 0,898 kg 48 %-ige wässrige Kalilauge, 2,85 kg Wasser und 58,02 kg Saccharose zudosiert und vermischt. Die Gemischtemperatur wurde auf 108°C erhöht. Anschließend wurden 46,0 kg Propylenoxid dosiert, wobei ein Druck von 6,5 bar nicht überschritten wurde. Die Reaktionstemperatur stieg während der Umsetzung bis auf 112°C und wurde für die gesamte Reaktionszeit beibehalten. Anschließend wurde das Produkt durch Vakuumstrippen auf einen Wassergehalt von 1 Gew.-% getrocknet. Das so erhaltene alkalische Propoxylat wies folgende Werte auf:

| | | |
|---|---|---|
| Hydroxylzahl | 741 | mg KOH/g |
| Wassergehalt | 1,064 | % |

Die Probe des Produktes hatte keinen kristallinen Niederschlag.

Das Vorpolymer wurde bei 112°C und 6,5 bar mit weiteren 91,0 kg Propylenoxyd umgesetzt.

Es folgte eine Nachreaktion von 3 Stunden bei 115°C. Der erhaltene rohe Polyetheralkohol wurde mit Wasser hydrolisiert, mit Phosphorsäure neutralisiert, filtriert und vakuumgestrippt.

Das Endprodukt wies nachstehende Werte auf:

| | | |
|---|---|---|
| Errechnete Funktionalität: | 6,23 | |
| Hydroxylzahl: | 459 | mg KOH/g |
| Säurezahl | 0,015 | mg KOH/g |
| Wassergehalt | 0,032 | Gew.-% |
| Viskosität 25°C | 44443 | mPa s |
| Gehalt freie Saccharose | 0,01 | Gew.-% |

Das Produkt war völlig klar.

### Beispiel 7, (erfindungsgemäß)

In einem analog dem Vergleichsbeispiel 1 ausgerüsteten Druckautoklaven wurden 3,07 kg Glycerin vorgelegt und auf 90°C erwärmt. Danach wruden 0,898 kg 48 %-ige wässrige Kalilauge, 2,70 kg Wasser und 57,0 kg Saccharose zudosiert und vermischt. Die Gemischtemperatur wurde auf 108°C erhöht. Anschließend wurden 48,0 kg Propylenoxid dosiert, wobei ein Druck von 6,5 bar nicht überschritten wurde. Die Reaktionstemperatur stieg während der Umsetzung bis auf 112°C und wurde für die gesamte Reaktionszeit beibehalten. Anschließend wurde das Produkt durch Vakuumstrippen auf einen Wassergehalt von 1 Gew.-% getrocknet. Das so erhaltene alkalische Propoxylat wies folgende Werte auf:

| | | |
|---|---|---|
| Hydroxylzahl | 705 | mg KOH/g |
| Wassergehalt | 1,068 | % |

Die Probe des Produktes hatte keinen kristallinen Niederschlag.

Das Vorpolymer wurde bei 112°C und 6,5 bar mit weiteren 106,2 kg Propylenoxyd umgesetzt.

Es folgte eine Nachreaktion von 3 Stunden bei 115°C. Der erhaltene rohe Polyetheralkohol wurde mit Wasser hydrolysiert, mit Phosphorsäure neutralisiert, filtriert und vakuumgestrippt.

Das Endprodukt wies nachstehende Werte auf:

| | | |
|---|---|---|
| Errechnete Funktionalität: | 7,17 | |
| Hydroxylzahl: | 406 | mg KOH/g |
| Säurezahl | 0,021 | mgKOH/g |
| Wassergehalt | 0,050 | Gew.-% |
| Viskosität 25°C | 25519 | mPa s |
| Gehalt freie Saccharose | 0,04 | Gew.-% |

Das Produkt war völlig klar.

### Beispiel 8, (erfindungsgemäß)

In einem analog dem Vergleichsbeispiel 1 ausgerüsteten Druckautoklaven wurden 5,71 kg Glycerin vorgelegt und auf 90°C erwärmt. Danach wurden 0,898 kg 48 %-ige wässrige Kalilauge, 2,70 kg Wasser und 53,01 kg Saccharose zudosiert und vermischt. Die Gemischtemperatur wurde auf 108°C erhöht. Anschließend wurden 48,0 kg Propylenoxid dosiert, wobei ein Druck von 6,5 bar nicht überschritten wurde. Die Reaktionstemperatur stieg während der Umsetzung bis auf 112°C und wurde für die gesamte Reaktionszeit beibehalten Anschließend wurde das Produkt durch Vakuumstrippen auf einen Wassergehalt von 0,5 Gew.-% getrocknet. Das so erhaltene alkalische Propoxylat wies folgende Werte auf:

| | | |
|---|---|---|
| Hydroxylzahl | 685 | mgKOH/g |
| Wassergehalt | 0,487 | % |

Die Probe des Produktes hatte keinen kristallinen Niederschlag.

Das Vorpolymer wurde bei 112°C und 6,5 bar mit weiteren 96,0 kg Propylenoxyd umgesetzt.

Es folgte eine Nachreaktion von 3 Stunden bei 115°C. Der erhaltene rohe Polyetheralkohol wurde mit Wasser hydrolisiert, mit Phosphorsäure neutralisiert, filtriert und vakuumgestrippt.

Das Endprodukt wies nachstehende Werte auf:

| | | |
|---|---|---|
| Errechnete Funktionalität: | 6,57 | |
| Hydroxylzahl: | 404 | mg KOH/g |
| Säurezahl | 0,035 | mg KOH/g |
| Wassergehalt | 0,040 | Gew.-% |
| Viskosität 25°C | 21412 | mPa s |
| Gehalt freie Saccharose | 0,021 | Gew.-% |

Das Produkt war völlig klar.

Die Bestimmung der Hydroxylzahl erfolgte nach DIN 53420; die Bestimmung der Säurezahl erfolgte nach DIN EN ISO 2114, die Bestimmung der Viskosität erfolgte nach DIN 53019 und die Bestimmung des Wassergehalts erfolgte nach DIN 51777.

Die Bestimmung der freien Saccharose erfolgte nach der Prüfmethode PFO/A 00/23-116. Dazu wurden 200 mg des Polyetheralkohols mit 200 Mikroliter einer Lösung aus 2 mg 1-Dodecanol in 1 ml Pyridin gelöst und danach mit 600 Mikrolitern N-Methyl-N-trimethylsilyltrifluoracetamid (MSTFA) versetzt. Nach der Zugabe des MSTFA wurde die probe 2 Stunden bei 70 bis 80°C im Wärmeschrank temperiert. Die auf Raumtemperatur abgekühlte Probe wurde in den Gaschromatographen injiziert.

## Patentansprüche

1. Verfahren zur Herstellung von Polyetheralkoholen durch katalytische Anlagerung von Alkylenoxiden an eine Startsubstanzmischung, enthaltend wasserlösliche, bei Raumtemperatur feste H-funktionelle Startsubstanzen, bei Reaktionstemperatur flüssige Alkohole und Wasser unter Verwendung von Alkali- und/oder Erdalkalimetallhydroxiden als Katalysatoren, **dadurch gekennzeichnet, dass** die Menge an Wasser 1,0 bis 6,0 Gew.-%, bezogen auf das Gewicht der Startsubstanzmischung, beträgt, wobei die Startsubstanzmischung keine aminischen Bestandteile enthält, und wobei nach der Anlagerung von 2 bis 6 Mol Alkylenoxid an die Startsubstanzmischung der Wassergehalt in der Reaktionsmischung auf kleiner 1 Gew.-%, bezogen auf das Gewicht der Startsubstanzmischung, reduziert wird.

2. Verfahren nach Anspruch 1, **dadurch gekennzeichnet, dass** die wasserlösliche, bei Raumtemperatur feste H-funktionelle Startsubstanz ausgewählt ist aus der Gruppe, enthaltend Saccharose und/oder Sorbit.

3. Verfahren nach Anspruch 1, **dadurch gekennzeichnet, dass** die Menge an Wasser 1,0 bis 3,5 Gew.-%, bezogen auf das Gewicht der Startsubstanzmischung, beträgt

4. Verfahren nach Anspruch 1, **dadurch gekennzeichnet, dass** die Funktionalität der Startsubstanzmischung ohne Berücksichtigung des Wassers größer 4,5 ist.

5. Verfahren nach Anspruch 1, **dadurch gekennzeichnet, dass** die Hydroxylzahl der Polyetheralkohole im Bereich zwischen 300 und 600 mgKOH/g liegt.

6. Verfahren nach Anspruch 1, **dadurch gekennzeichnet, dass** die bei Reaktionstemperatur flüssigen Alkohole ausgewählt sind aus der Gruppe, enthaltend Glycerin, Trimethylolpropan, Ethylenglykol, Diethylenglykol, Triethylenglykol, Propylenglykol, Dipropylenglykol, Tripropylenglykol, und Butandiole.

7. Verfahren nach Anspruch 4, **dadurch gekennzeichnet, dass** bei Reaktionstemperatur flüssige Alkohole ausgewählt sind aus der Gruppe, enthaltend Glycerin und Trimethylolpropan.

8. Polyetheralkohole, herstellbar nach einem der Ansprüche 1 bis 7.

## Claims

1. A process for preparing polyether alcohols by catalytic addition of alkylene oxides onto a starter substance mixture comprising water-soluble H-functional starter substances which are solid at room temperature, alcohols which are liquid at the reaction temperature and water using alkali metal hydroxides and/or alkaline earth metal hydroxides as catalysts, wherein the amount of water is from 1.0 to 6.0% by weight, based on the weight of the starter substance mixture, and the starter substance mixture comprises no amine constituents and the water content of the reaction mixture is reduced to less than 1% by weight, based on the weight of the starter substance mixture, after addition of from 2 to 6 mol of alkylene oxide onto the starter substance mixture.

2. The process according to claim 1, wherein the water-soluble H-functional starter substance which is solid at room temperature is selected from the group consisting of sucrose and/or sorbitol.

3. The process according to claim 1, wherein the amount of water is from 1.0 to 3.5% by weight, based on the weight of the starter substance mixture.

4. The process according to claim 1, wherein the functionality of the starter substance mixture without taking the water into account is greater than 4.5.

5. The process according to claim 1, wherein the hydroxyl number of the polyether alcohols is in the range from 300 to 600 mg KOH/g.

6. The process according to claim 1, wherein the alcohols which are liquid at the reaction temperature are selected from the group consisting of glycerol, trimethylolpropane, ethylene glycol, diethylene glycol, triethylene glycol, propylene glycol, dipropylene glycol, tripropylene glycol and butanediols.

7. The process according to claim 4, wherein the alcohols which are liquid at the reaction temperature are selected from the group consisting of glycerol and trimethylolpropane.

8. A polyether alcohol which can be prepared according to any of claims 1 to 7.

## Revendications

1. Procédé pour la préparation de polyétheralcools par fixation par addition catalytique d'oxydes d'alkylène sur un mélange de substances de départ, contenant des substances de départ à fonction H, solides à la température ambiante, solubles dans l'eau, des alcools liquides à la température de la réaction et de l'eau, avec utilisation d'hydroxydes de métaux alcalins et/ou d'hydroxydes de métaux alcalino-terreux en tant que catalyseurs, **caractérisé en ce que** la quantité d'eau vaut de 1,0 à 6,0 % en poids, par rapport au poids du mélange de substances de départ, dans lequel le mélange de substances de départ ne contient pas de composants de type amine, et dans lequel après la fixation par addition de 2 à 6 moles d'oxyde d'alkylène sur le mélange de substances de départ la teneur en eau du mélange réactionnel est réduite à moins de 1 % en poids, par rapport au poids du mélange de substances de départ.

2. Procédé selon la revendication 1, **caractérisé en ce que** la substance de départ à fonction H, solide à la température ambiante, soluble dans l'eau, est choisie dans le groupe contenant le saccharose et/ou le sorbitol.

3. Procédé selon la revendication 1, **caractérisé en ce que** la quantité d'eau vaut de 1,0 à 3,5 % en poids, par rapport au poids du mélange de substances de départ.

4. Procédé selon la revendication 1, **caractérisé en ce que** la fonctionnalité du mélange de substances de départ sans tenir compte de l'eau est supérieure à 4,5.

5. Procédé selon la revendication 1, **caractérisé en ce que** l'indice d'hydroxyle des polyétheralcools se situe dans la plage comprise entre 300 et 600 mg de KOH/g.

6. Procédé selon la revendication 1, **caractérisé en ce que** les alcools liquides à la température de la réaction sont choisis dans le groupe contenant le glycérol, le triméthylolpropane, l'éthylèneglycol, le diéthylèneglycol, le triéthylèneglycol, le propylène-glycol, le dipropylèneglycol, le tripropylèneglycol et les butanediols.

7. Procédé selon la revendication 4, **caractérisé en ce que** les alcools liquides à la température de la réaction sont choisis dans le groupe contenant le glycérol et le triméthylolpropane.

8. Polyétheralcools, pouvant être préparés selon l'une quelconque des revendications 1 à 7.
